# EUROPEAN PATENT APPLICATION

(11) **EP 2 963 726 A1**
(43) Date of publication of application: **06.01.2016**
(21) Application number: 15174312.7
(22) Date of filing: 29.06.2015
(51) Int. Cl.: H01M 8/24, H01M 8/04, H01M 8/06, H01M 8/12

(54) **FUEL CELL SYSTEM**

(30) Priority: 30.06.2014 JP 2014134694
(71) Applicant: Aisin Seiki Kabushiki Kaisha, Kariya-shi Aichi-ken, 448-8650 (JP)
(72) Inventor: Ohkawara, Hiroki, Aichi-ken, Aichi 448-8650 (JP); Endo, Satoshi, Aichi-ken, Aichi 448-8650 (JP)
(74) Representative: D Young & Co LLP

(57) **Abstract**

A fuel cell system (100) includes a fuel cell (34), a combusting portion (36), a casing (31), a housing (10a) accommodating the casing, a ventilation exhaust line (KL) including an intake portion (10c) and an exhaust portion (10d), the ventilation exhaust line through which air introduced by the intake portion from the outside flows, the air thereafter being discharged from the exhaust portion, a combustion exhaust line (NL) including a cathode air supply pipe (11c) and an exhaust pipe (11d) and being branched from the ventilation exhaust line to be independently provided, a ventilation exhaust check valve (41) provided at the ventilation exhaust line to inhibit an exhaust combustion gas from the outside from flowing backwards into the housing, and a combustion exhaust check valve (43) provided at the combustion exhaust line to inhibit an exhaust combustion gas from the outside from flowing backwards into the housing.

## Description

### TECHNICAL FIELD

This disclosure generally relates to a fuel cell system.

### BACKGROUND DISCUSSION

A known fuel cell system is disclosed, for example, in JP2006-253020A which will be hereinafter referred to as Reference 1. The fuel cell system disclosed in Reference 1 includes a body (housing) including a fuel processing apparatus (reformer) generating hydrogen rich gas and a fuel cell body (fuel cell module). The fuel cell system also includes an air intake and exhaust apparatus provided at the body so as to take in and discharge air relative to an outside of the body. The air intake and exhaust apparatus includes an outer pipe duct member taking in air from the outside and an inner pipe duct member mixing exhaust gas, cathode off-air and inside ventilation air at a gas mixing portion to discharge the mixture to the outside. An outer wall of the inner pipe duct member is covered by the outer pipe duct member in a state where a ventilation passage is secured between the outer wall of the inner pipe duct member and the outer pipe duct member to thereby form a double pipe duct configuration. An exhaust fan is provided at the gas mixing portion of the inner pipe duct member for forcibly discharging the exhaust gas, the cathode off-air and the inside ventilation air which are mixed together. In a case where gas leakage occurs within the body, emission of gas from the body to the outside may be inhibited because of suction and ventilation of the inside of the body by the exhaust fan so that the inside of the body is maintained at a lower pressure than the outside of the body.

JP2012-199068A which will be hereinafter referred to as Reference 2 discloses a connection structure of an exhaust passage of a fuel cell system. The fuel cell system includes the exhaust passage connecting an exhaust outlet of a fuel cell unit and an exhaust outlet of a boiler each other so that exhaust gas from the fuel cell unit and exhaust gas from the boiler join each other. The exhaust outlet of the fuel cell unit is arranged at an upper side than the exhaust outlet of the boiler. An outer wall of the exhaust passage is covered by a ventilation passage along the outer wall of the exhaust passage in a state where the ventilation passage is secured relative to the outer wall of the exhaust passage to thereby form the double pipe duct configuration. Accordingly, water drops generated by condensation of the exhaust gas within the exhaust passage is restrained from mixing into the fuel cell unit. In addition, combustion air is suctioned by a pump and cathode air is suctioned by a pump so that air is taken in from an intake port of an intake duct while combustion exhaust and cathode off-gas are emitted or discharged to the outside of a housing of the fuel cell unit from the exhaust outlet.

In the fuel cell system disclosed in Reference 1, the exhaust fan is provided at the gas mixing portion of the inner pipe duct member. Then, the combustion exhaust, the cathode off-air and the inside ventilation air that are mixed together are forcibly discharged by the exhaust fan. Nevertheless, in a case where the exhaust fan provided at the gas mixing portion is stopped by the stop of the fuel cell system, exhaust combustion gas from the outside (for example, exhaust combustion gas from a boiler installed together with the fuel cell system) may flow backwards into the housing (power generation unit body) through the inner pipe duct member.

In addition, in the fuel cell system disclosed in Reference 2, because the boiler is installed together, exhaust combustion gas from the boiler may flow backwards into the fuel cell system in a state where the fuel cell system is stopped. In order to inhibit such exhaust combustion gas from flowing backwards into the fuel cell system, it is considered to provide a check valve in the vicinity of the exhaust outlet of the fuel cell system. Nevertheless, in a case where some error occurs in association with the check valve, it is difficult to identify whether such error is based on the check valve or not by simply providing the check valve in the vicinity of the exhaust outlet.

A need thus exists for a fuel cell system which includes a check valve at a ventilation exhaust line and a check valve at a combustion exhaust line to inhibit exhaust combustion gas from an outside of a housing from flowing backwards into an inside of the housing and to easily specify a failure caused by each of the check valves, in a case where an error occurs during an operation of the fuel cell system, based on circumstances where the error is detected.

### SUMMARY

According to an aspect of this disclosure, a fuel cell system includes a fuel cell generating an electric power from a fuel and an oxidant gas, a combusting portion generating an exhaust combustion gas by burning an anode off-gas from the fuel cell and a cathode off-gas from the fuel cell, a casing formed by an insulative material and accommodating the fuel cell and the combusting portion at an inner portion in an airtight manner, a housing accommodating the casing at an inner portion, a ventilation exhaust line including an intake portion that is provided at the housing to suction gas from an outside of the housing and an exhaust portion that is provided at the housing to discharge gas within the housing, the ventilation exhaust line through which air introduced by the intake portion from the outside flows, the air thereafter being discharged from the exhaust portion, a combustion exhaust line including a cathode air supply pipe that connects the housing and the fuel cell each other to supply air including the oxidant gas within the housing to the fuel cell and an exhaust pipe that connects the combusting portion and the outside of the housing each other to discharge an exhaust combustion gas generated at the combusting portion to the outside of the housing, the combustion exhaust line being branched from a portion of the ventilation exhaust line to be independently provided, a ventilation exhaust check valve provided at the ventilation exhaust line to inhibit an exhaust combustion gas from the outside of the housing from flowing backwards into the housing by flowing through the exhaust portion, and a combustion exhaust check valve provided at the combustion exhaust line to inhibit an exhaust combustion gas from the outside of the housing from flowing backwards into the housing by flowing through the exhaust pipe.

Accordingly, the exhaust combustion gas from the outside of the housing is inhibited form flowing backwards into the housing by flowing through the exhaust portion at the ventilation exhaust line or the exhaust pipe at the combustion exhaust line by the ventilation exhaust check valve provided at the ventilation exhaust line and the combustion exhaust check valve provided at the combustion exhaust line. In addition, because the check valves (i.e., the ventilation exhaust check valve and the combustion exhaust check valve) are provided at the ventilation exhaust line and the combustion exhaust line, respectively, it may be easily identified that which check valve causes the failure on a basis of circumstances where an error is detected in a case where the error occurs in an operation of the fuel cell system.

The combustion exhaust check valve is provided at an inlet side of the combustion exhaust line.

Accordingly, the combustion exhaust check valve is disposed within the housing relative to which the exhaust combustion gas from the outside is inhibited from directly contacting. Thus, deterioration of the combustion exhaust check valve caused by water vapor contained in the exhaust combustion gas from the outside, for example, is restrained.

The ventilation exhaust check valve is provided at an outlet side of the ventilation exhaust line.

Accordingly, in a case where a failure occurs by the ventilation exhaust check valve, provided at the outlet side of the ventilation exhaust line, in a closed state, air at the combustion exhaust line flows into the housing from an inlet side of the ventilation exhaust line so as to ventilate the inside of the housing. Accordingly, as compared to a case where the ventilation exhaust check valve is provided at the inlet side of the ventilation exhaust line, abnormal increase of temperature within the housing is restrained.

The fuel cell system further includes a flow rate detection device detecting a flow rate of gas flowing through the combustion exhaust line and a combustion exhaust line error detection portion detecting an error in the combustion exhaust line based on the detected flow rate of gas detected by the flow rate detection device.

Accordingly, the combustion exhaust line error detection portion may detect the error in the combustion exhaust line based on the detected flow rate of gas detected by the flow rate detection device. Thus, in a case where the failure occurs by the combustion exhaust check valve in the closed state and thus blocking of the combustion exhaust line occurs, the error in the combustion exhaust line is detectable. As a result, the failure caused by the combustion exhaust check valve is identifiable.

The fuel cell system further includes a combustible gas concentration detection device provided within the housing to detect a combustible gas concentration within the housing and a first housing error detection portion detecting an error in the combustible gas concentration within the housing based on the detected combustible gas concentration detected by the combustible gas concentration detection device.

Accordingly, the first housing error detection portion may detect the error in the combustible gas concentration within the housing based on the detected combustible gas concentration detected by the combustible gas concentration detection device. Thus, in a case where the failure occurs by the ventilation exhaust check valve in the closed state and thus the ventilation within the housing is inhibited so that the combustible gas flows into the housing from the casing, the first housing error detection portion may detect the error state within the housing. As a result, the failure caused by the ventilation exhaust check valve is identifiable.

The fuel cell system further includes a temperature detection device provided within the housing to detect a temperature within the housing and a second housing error detection portion detecting an error in the temperature within the housing based on the detected temperature within the housing detected by the temperature detection device.

Accordingly, the second housing error detection portion may detect the error in the temperature within the housing based on the detected temperature within the housing detected by the temperature detection device. Thus, in a case where the failure occurs by the ventilation exhaust check valve in the closed state and thus the ventilation within the housing is inhibited so that the temperature within the housing increases, the second housing error detection portion may detect the error state within the housing. As a result, the failure caused by the ventilation exhaust check valve is identifiable.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a state where exhaust air from a fuel cell system and exhaust air from a boiler join together at a chimney according to a first embodiment disclosed here;
Fig. 2 is a schematic view schematically illustrating the fuel cell system according to the first embodiment;
Fig. 3 is a flowchart illustrating a procedure for identifying a failure caused by a combustion exhaust check valve;
Fig. 4 is a flowchart illustrating a procedure for identifying a failure caused by a ventilation exhaust check valve based on a temperature within a housing;
Fig. 5 is a flowchart illustrating a procedure for identifying the failure caused by the ventilation exhaust check valve based on a combustible gas concentration within the housing;
Fig. 6 is a schematic view schematically illustrating the fuel cell system according to a second embodiment disclosed here; and
Fig. 7 is a schematic view schematically illustrating the fuel cell system according to a third embodiment disclosed here;

### DETAILED DESCRIPTION

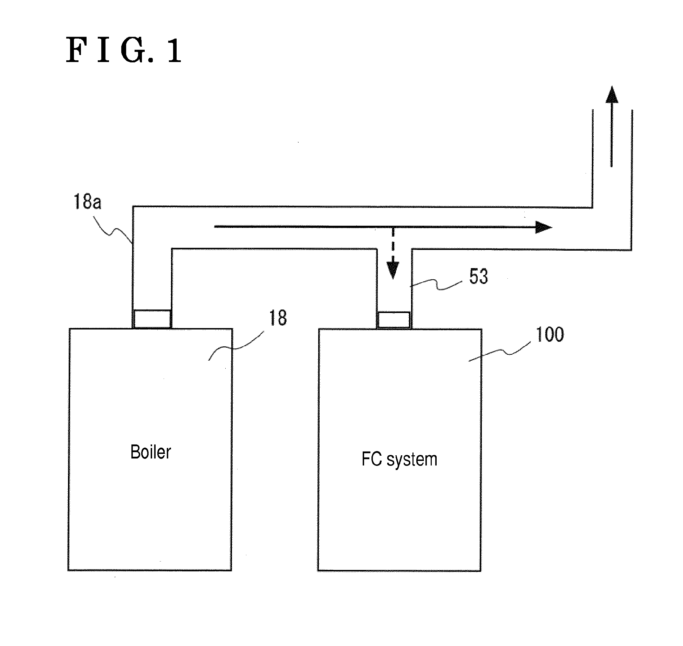

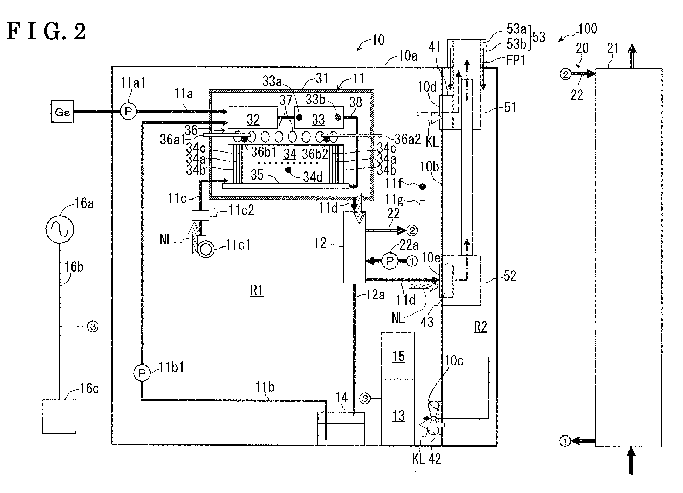

A fuel cell system according to a first embodiment is explained with reference to the attached drawings. As illustrated in Fig. 2, a fuel cell system (FC system) 100 includes a power generation unit 10 and a water storage tank 21. As illustrated in Fig. 1, the fuel cell system 100 is installed together with a boiler 18. The boiler 18 combustions or burns source gas in a hydrocarbon system, for example, together with air for hot water supply. A chimney 18a (exhaust exit) of the boiler 18 is in communication with a chimney portion 53 (exhaust exit portion) of the fuel cell system 100. The power generation unit 10 includes a housing 10a, a fuel cell module 11, a heat exchanger 12, an inverter device 13, a water tank 14, and a control unit 15.

As illustrated in Fig. 2, the fuel cell module 11 is configured to include at least a fuel cell 34. The fuel cell module 11 is supplied with the source material (fuel), water for reforming (water), and cathode air (oxidant gas). Specifically, the fuel cell module 11 is connected to a first end of a fuel supply pipe 11 a of which a second end is connected to a supply source Gs so that the source material is supplied to the fuel supply pipe 11 a. A fuel pump 11a1 is provided at the fuel supply pipe 11 a. In addition, the fuel cell module 11 is connected to a first end of a water supply pipe 11 b of which a second end is connected to the water tank 14 so that the water is supplied to the water supply pipe 11 b. A water pump 11 b1 is provided at the water supply pipe 11 b. Further, the fuel cell module 11 is connected to a first end of a cathode air supply pipe 11 c of which a second end is connected to a cathode air blower 11 c1 so that the cathode air is supplied to the cathode air supply pipe 11c.

The heat exchanger 12 is supplied with exhaust combustion gas emitted or discharged from the fuel cell module 11 and with storage water stored at the water storage tank 21 to perform a heat exchange between the exhaust combustion gas and the storage water. Specifically, the water storage tank 21 which stores water (hot or warmed water) serving as the storage water is connected to a water circulation line 22 at which the water (storage water) circulates in a direction indicated by arrows in Fig. 2. A water circulation pump 22a and the heat exchanger 12 are arranged in the mentioned order from a lower end to an upper end at the water circulation line 22. An exhaust pipe 11 d from the fuel cell module 11 is connected to the heat exchanger 12 in a penetration manner. A condensed water supply pipe 12a which is connected to the water tank 14 is connected to the heat exchanger 12.

The exhaust combustion gas from the fuel cell module 11 is led to the heat exchanger 12 by flowing through the exhaust pipe 11 d and is condensed and cooled at the heat exchanger 12 because of the heat exchange with the storage water. The exhaust combustion gas after condensation flows through the exhaust pipe 11 d and an exhaust combustion gas port 10e to be discharged to the outside of the housing 10a. Condensed water resulting from the aforementioned heat exchange flows through the condensed water supply pipe 12a so as to be supplied to the water tank 14. The water tank 14 brings the condensed water to be formed into pure water (deionized water) by means of ion-exchange resin.

The heat exchanger 12, the water storage tank 21, and the water circulation line 22 constitute an exhaust heat recovery system 20. The exhaust heat recovery system 20 recovers exhaust heat of the fuel cell module 11 and stores the exhaust heat in the storage water.

The inverter device 13 receives a direct-current (DC) voltage output from the fuel cell 34 and converts the DC voltage into a predetermined alternating-current (AC) voltage so as to output the AC voltage to a power line 16b connected to an alternating system power supply 16a (hereinafter simply referred to as a system power supply 16a) and an external electric power load 16c (hereinafter simply referred to as an external power load 16c) such as an electrical appliance, for example. The inverter device 13 also receives an AC voltage from the system power supply 16a via the power line 16b and converts the AC voltage into a predetermined DC voltage so as to output the DC voltage to an auxiliary machinery and the control unit 15, for example. The auxiliary machinery includes the water pump 11 b1, the fuel pump 11 a1, a ventilation fan 42, and the cathode air blower 11c1, for example, for supplying the source material, water, and air to the fuel cell module 11. The auxiliary machinery is driven by the DC voltage.

The fuel cell module 11 includes a casing 31, an evaporating portion 32, a reforming portion 33, the fuel cell 34, and a combusting portion 36. The casing 31 in a box form is made of an insulative material.

The evaporating portion 32, which is heated by combustion gas, evaporates water (water for reforming) supplied to the evaporating portion 32 so as to generate water vapor. The evaporating portion 32 also preheats the source material (fuel) supplied to the evaporating portion 32. The evaporating portion 32 mixes the water vapor generated in the aforementioned manner and the source material that is preheated so as to supply the mixture to the reforming portion 33. The source material corresponds to gaseous fuel (gaseous fuel for reforming) such as natural gas and LPG (liquefied petroleum gas), for example, and liquid fuel (liquid fuel for reforming) such as kerosene, gasoline (petrol) and methanol, for example. In the explanation of the present embodiment, the source material corresponds to the natural gas.

The evaporating portion 32 is connected to the first end of the water supply pipe 11 b of which the second end (lower end) is connected to the water tank 14. In addition, the evaporating portion 32 is connected to the first end of the fuel supply pipe 11 a of which the second end is connected to the supply source Gs. The supply source Gs corresponds to a city gas supply pipe or an LPG gas cylinder, for example.

The reforming portion 33 is heated by the aforementioned combustion gas so as to receive heat necessary for a water vapor reforming reaction. The reforming portion 33 generates reformed gas from mixed gas (source material and water vapor) supplied from the evaporating portion 32 and discharges the reformed gas. The inside of the reforming portion 33 is filled with a catalyst, for example, a ruthenium catalyst (Ru catalyst) or a nickel catalyst (Ni catalyst). The mixed gas supplied from the evaporating portion 32 reacts by means of the catalyst so as to be reformed, thereby generating hydrogen gas and gas containing carbon monoxide, for example (water vapor reforming reaction). The reformed gas includes hydrogen, carbon monoxide, carbon dioxide, water vapor, natural gas (methane gas) that is not reformed, and water (water vapor) not used for reforming. Accordingly, the reforming portion 33 generates the reformed gas (fuel) from the source material (source fuel) and the water for reforming to supply the reformed gas to the fuel cell 34. The water vapor reforming reaction is an endothermic reaction. The reforming portion 33 includes temperature sensors 33a and 33b each of which transmits a detection result to the control unit 15.

The fuel cell 34 includes a lamination of plural cells 34a each including a fuel electrode, an air electrode (oxidant electrode), and an electrolyte disposed between the fuel electrode and the air electrode. The fuel cell 34 according to the present embodiment is a solid oxide fuel cell (SOFC) where zirconium oxide serving as a solid oxide is used as the electrolyte. The fuel electrode of the fuel cell 34 is supplied with hydrogen, carbon monoxide, and methane gas, for example, as fuel. An operating temperature of the fuel cell 34 is substantially in a range from 400 °C to 1,000 °C. Not only hydrogen is used as the fuel but also natural gas or coal gas may be directly used as the fuel. When the natural gas or the coal gas is directly used as the fuel, the reforming portion 33 may be omitted.

A fuel flow passage 34b through which the reformed gas serving as the fuel flows is formed at the fuel electrode of each of the cells 34a. An air flow passage 34c through which the air (cathode air) serving as the oxidant gas flows is formed at the air electrode of each of the cells 34a.

The fuel cell 34 includes a temperature sensor 34d detecting a temperature of the fuel cell 34. The temperature sensor 34d transmits a detection result to the control unit 15. The fuel cell 34 is placed on a manifold 35. The reformed gas is supplied from the reforming portion 33 to the manifold 35 via a reformed gas supply pipe 38. A lower end (first end) of the fuel flow passage 34b is connected to a fuel lead-out port formed at the manifold 35. The reformed gas led out from the fuel lead-out port of the manifold 35 is introduced from the lower end of the fuel flow passage 34b and is discharged from an upper end of the fuel flow passage 34b. The cathode air sent from the cathode air blower 11 c1 flows through the cathode air supply pipe 11 c so as to be supplied from a lower end of the air flow passage 34c and be discharged from an upper end of the air flow passage 34c. A flow sensor 11 c2 serving as a flow rate detection device is provided at the cathode air supply pipe 11c so as to detect a flow rate of gas (cathode air) flowing through the cathode air supply pipe 11c. The detection value of flow rate detected by the flow sensor 11 c2 is output as a signal to the control unit 15 serving as a combustion exhaust line error detection portion. The control unit 15 controls the flow rate of cathode air sent from the cathode air blower 11 c1.

The combusting portion 36 is disposed among the fuel cell 34, the evaporating portion 32, and the reforming portion 33. The combusting portion 36 heats the reforming portion 33 by burning anode off-gas (fuel off-gas) from the fuel cell 34 and cathode off-gas (oxidant off-gas) from the fuel cell 34.

The anode off-gas is burnt at the combusting portion 36 so as to generate flames 37. First and second ignition heaters 36a1 and 36a2 are provided at the combusting portion 36 to ignite the anode off-gas. In addition, first and second temperature sensors 36b1 and 36b2 are provided at the combusting portion 36 to detect a temperature at the combusting portion 36. Each of the first and second temperature sensors 36b1 and 36b2 transmits a detection result (output signal) to the control unit 15.

The housing 10a is divided by an inner panel 10b into a fuel cell chamber R1 and an exhaust duct chamber R2. The fuel cell chamber R1 houses or accommodates therein the fuel cell module 11, the heat exchanger 12, the invertor device 13, the water tank 14, and the control unit 15. The exhaust duct chamber R2 houses therein a ventilation exhaust duct 51 and a combustion exhaust duct 52.

An air intake port 10c serving as an intake portion suctioning outside air (gas from the outside) into the fuel cell chamber R1, a ventilation air exhaust port 10d serving as an exhaust portion emitting or discharging air (gas) within the fuel cell chamber R1 to the outside, and the exhaust combustion gas port 10e emitting or discharging the exhaust combustion gas from the heat exchanger 12 to the outside are formed at the inner panel 10b. A ventilation exhaust check valve 41 is provided at the ventilation air exhaust port 10d. The ventilation exhaust check valve 41 allows a flow of air from the fuel cell chamber R1 to the exhaust duct chamber R2 but prohibits or restricts the flow of air in the opposite direction.

The ventilation fan 42 is provided at the air intake port 10c. The ventilation fan 42 introduces or takes in the outside air from an outer pipe 53b of the chimney portion 53 that is in communication with the outside and the exhaust duct chamber R2. The ventilation air exhaust port 10d is connected to a first end of the ventilation exhaust duct 51. A second end of the ventilation exhaust duct 51 is connected to an inner pipe 53a of the chimney portion 53. In a case where the ventilation fan 42 is driven, the air (ventilation exhaust air) within the fuel cell chamber R1 is discharged or emitted to the outside by flowing through the ventilation air exhaust port 10d, the ventilation exhaust duct 51, and the inner pipe 53a of the chimney portion 53 as indicated by an arrow with a broken line.

A ventilation exhaust line KL includes the air intake port 10c provided at the housing 10a to suction or take in the air from the outside and the ventilation air exhaust port 10d provided at the housing 10a to discharge or emit the air within and from the housing 10a. The ventilation exhaust line KL takes in the outside air from the air intake port 10c by the ventilation fan 42 so that the air flows through the fuel cell chamber R1 defined at the inside of the housing 10a and sends out the air from the ventilation air exhaust port 10d.

A combustion exhaust check valve 43 is provided at the exhaust combustion gas port 10e. A first end of the combustion exhaust duct 52 is connected to the exhaust combustion gas port 10e. A second end of the combustion exhaust duct 52 joins and connects the ventilation exhaust duct 51. The combustion exhaust check valve 43 allows a flow of air from the exhaust pipe 11d to the combustion exhaust duct 52 but inhibits or restricts the flow of air in the opposite direction. During a power generation of the fuel cell system 100, the exhaust combustion gas emitted from the fuel cell module 11 flows through the exhaust combustion gas port 10e and the combustion exhaust duct 52 to be led out to the ventilation exhaust duct 51 (indicated by arrows with alternate long and short dash lines) so as to join the ventilation exhaust air. The resulting gas flows through the ventilation exhaust duct 51 and the inner pipe 53a of the chimney portion 53 to be discharged or emitted to the outside.

A combustion exhaust line NL includes the cathode air supply pipe 11c connecting the housing 10a and the fuel cell 34 each other to supply the air including the oxidant gas within the housing 10a to the fuel cell 34, and the exhaust pipe 11 d connecting the combusting portion 36 and the outside of the housing 10a each other to discharge the exhaust combustion gas generated at the combusting portion 36 to the outside. The combustion exhaust line NL is branched from a portion of the ventilation exhaust line KL by the cathode air supply pipe 11c so as to be independently provided.

A temperature sensor 11f serving as a temperature detection device detecting a temperature within the fuel cell chamber R1 is provided at the fuel cell chamber R1 that is defined within the housing 10a by the inner panel 10b. In addition, a combustible gas concentration sensor 11 g serving as a combustible gas concentration detection device detecting a concentration of combustible gas within the fuel cell chamber R1 is provided at the fuel cell chamber R1. The detection value of temperature detected by the temperature sensor 11f is output as a signal to the control unit 15 serving as a second housing error detection portion. The detection value of combustible gas concentration detected by the combustible gas concentration sensor 11 g is output as a signal to the control unit 15 serving as a first housing error detection portion.

The chimney portion 53 includes a double pipe configuration constituted by the inner pipe 53a and the outer pipe 53b. An air intake flow passage FP1 is formed between the inner pipe 53a and the outer pipe 53b. The air intake flow passage FP1 connects the outside and the exhaust duct chamber R2 each other. The outside air passes through the air intake flow passage FP1 to flow into (to be taken into) the exhaust duct chamber R2.

The aforementioned temperature sensors 11 f, 33a, 33b, 34d, 36b1, 36b2, the flow sensor 11 c2, the combustible gas concentration sensor 11 g, the water pump 41 a, the fuel pump 11 a1, the cathode air blower 11 c1, the ventilation fan 42 and the ignition heaters 36a1 and 36a2 are connected to the control unit 15. The control unit 15 includes a microcomputer which includes an input-output interface, a CPU, a RAM and a ROM which are connected one another via bus. The CPU performs the operation of the fuel cell system 100. The RAM tentatively stores variables or parameters necessary for conducting program. The ROM stores the aforementioned program.

Next, an example of a basic operation of the fuel cell system 100 is explained. In a case where a start switch is pressed or based on a planned operation, the control unit 15 starts a start-up operation (a warm-up operation).

When the start-up operation is started, the control unit 15 drives and operates the auxiliary machinery. Specifically, the control unit 15 drives the fuel pump 11a1 and the water pump 11 b1 to start supplying the source material and the condensed water (water for reforming) to the evaporating portion 32. In addition, the control unit 15 drives the cathode air blower 11 c1 to start supplying the cathode air to the fuel cell 34. The anode off-gas led out from the fuel cell 34 is ignited by the first and second ignition heaters 36a1 and 36a2 at the combusting portion 36. In a case where each of the reforming portion 33 and the fuel cell 34, for example, reaches or exceeds a predetermined temperature, the start-up operation is finished to start a power generation operation. During the power generation operation, the control unit 15 controls the auxiliary machinery so that an electric power generated by the fuel cell 34 is equalized with a consumed electric power of the external power load 16c and supplies the reforming gas and the cathode air to the fuel cell 34.

In a case where a stop switch is pressed to stop the power generation operation during the aforementioned power generation operation or in a case where the power generation operation is stopped in accordance with the planned operation, the control unit 15 performs a stop operation (stop process) of the fuel cell system 100. Specifically, the control unit 15 stops the supply of the source material and the condensed water to the evaporating portion 32 and the supply of the source gas and the cathode air to the fuel cell 34.

In a case where the aforementioned stop operation is finished, the fuel cell system 100 is brought to a standby state. When the fuel cell system 100 is in the standby state, the fuel cell system 100 is in a power generation stop state (i.e., in a state where none of the start-up operation, the power generation operation or the stop operation is performed) and in a state waiting for a command of power generation (for example, turning-on of the start switch).

In a case where the boiler 18 that is installed together with the fuel cell system 100 is used or operated in a state where the supply of the cathode air to the fuel cell 34 is stopped because of the stop operation of the fuel cell system 100, the exhaust combustion gas generated by burning of the boiler 18 flows into the inner pipe 53a of the chimney portion 53 because the chimney portion 53 of the fuel cell system 100 is connected to the chimney 18a of the boiler 18.

Nevertheless, in the present embodiment, the ventilation exhaust check valve 41 is provided at the ventilation air exhaust port 10d that performs exhaust ventilation, i.e., ventilation of air, from the fuel cell chamber R1 within the housing 10a to the inner pipe 53a so that the exhaust combustion gas of the boiler 18 that flows into the inner pipe 53a is inhibited from flowing backwards into the fuel cell chamber R1.

In addition, the combustion exhaust check valve 43 is provided at the exhaust combustion gas port 10e that discharges or emits the exhaust combustion gas from the exhaust pipe 11d towards the inner pipe 53a. Thus, the exhaust combustion gas from the boiler 18 flowing into the inner pipe 53a is inhibited from flowing backwards into the exhaust pipe 11d or into the fuel cell chamber R1 via the exhaust pipe 11d.

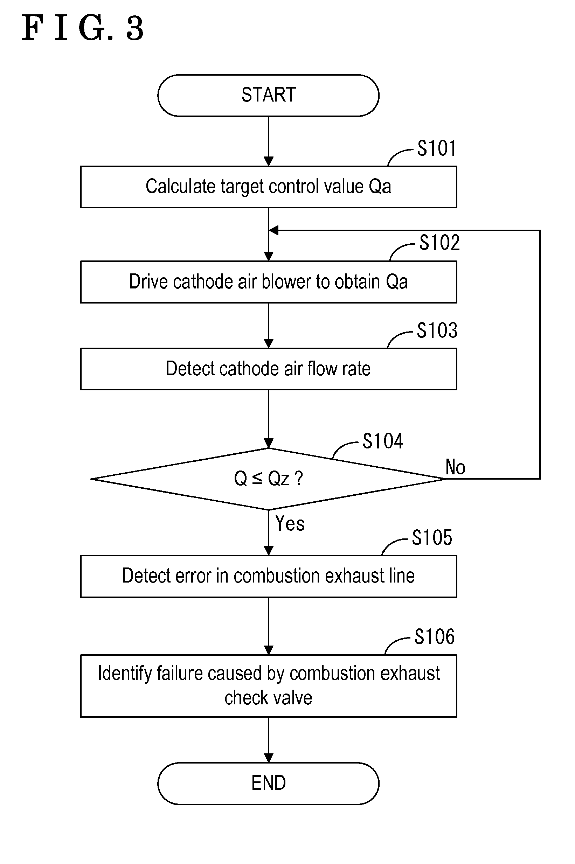

In the aforementioned start-up operation, the control unit 15 identifies a failure or breakage of the fuel cell system 100 caused by or in association with the combustion exhaust check valve 43 in a closed state by the following procedure as illustrated in Fig. 3. First, the control unit 15 calculates a target control value Qa of the flow rate of cathode air (i.e., cathode air flow rate) depending on the external power load 16c in step S101 (hereinafter "step" is omitted). The control unit 15 specifies and stores beforehand a threshold value Qz indicating an error state of the cathode air flow rate. The identification of failure caused by the combustion exhaust check valve 43 in the closed state is not limited to be conducted during the start-up operation and may be conducted during the power generation operation at a late-night, for example. In this case, the target control value Qa of the cathode air flow rate may be a minimum power generation rate.

The control unit 15 performs a feedback control on the cathode air blower 11 c1 so that the cathode air blower 11 c1 is driven to obtain the calculated target control value Qa of the cathode air flow rate in S102. The cathode air sent out from the cathode air blower 11c1 is supplied to the combusting portion 36 by flowing through the air flow passage 34c of the fuel cell 34.

Next, the control unit 15 detects the flow rate of cathode air flowing through the cathode air supply pipe 11c, i.e., a cathode air flow rate Q, by the flow sensor 11 c2 in S103. The control unit 15 then determines whether or not the detected flow rate of cathode air by the flow sensor 11 c2 is equal to or smaller than the threshold value Qz indicating an error state of the combustion exhaust line NL (for example, blocking of the combustion exhaust line NL) or an error state of the cathode air blower 11c1 in S104.

In a case where the control unit 15 determines that the cathode air flow rate Q is not equal to or smaller than the threshold value Qz in S104, the control unit 15 returns to the process in S102 to supply the target control value Qa of the cathode air flow rate to the cathode air supply pipe 11c.

The control unit 15 proceeds to the process in S105 in a case where the cathode air flow rate Q is equal to or smaller than the threshold value Qz so as to detect the error state of the combustion exhaust line NL. As a result, the control unit 15 identifies the failure caused by the combustion exhaust check valve 43, provided at the exhaust combustion gas port 10e, in the closed state in S106. The control unit 15 may detect the error state of the combustion exhaust line NL when a duty value of the cathode air blower 11c1 reaches or exceeds a predetermined duty value in a state where the flow rate of cathode air is controlled to be the target control value Qa. The control unit 15 warns about the failure caused by the combustion exhaust check valve 43 in the closed state via a warning lamp, for example, which leads to a termination of the present control.

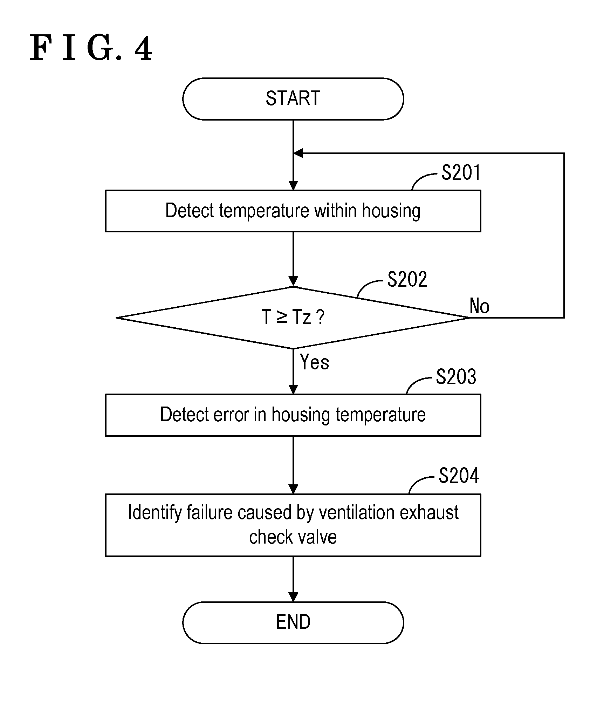

In the aforementioned power generation operation, the control unit 15 identifies the failure or breakage of the fuel cell system 100 caused by or in association with the ventilation exhaust check valve 41 by the following procedure. The temperature sensor 11f serving as the temperature detection device detecting a temperature T within the fuel cell chamber R1 is provided at the fuel cell chamber R1. The control unit 15 identifies the failure caused by the ventilation exhaust check valve 41 based on a flowchart illustrated in Fig. 4.

In a case where the failure occurs by the ventilation exhaust check valve 41, provided at the ventilation air exhaust port 10d, in the closed state, the air within the fuel cell chamber R1 is inhibited from being discharged to the outside from the ventilation air exhaust port 10d. The air is only introduced to the fuel cell chamber R1 from the air intake port 10c, which may lead to insufficient ventilation within the fuel cell chamber R1. Accordingly, the temperature T within the fuel cell chamber R1 increases by the fuel cell module 11 or the invertor device 13, for example, serving as a high-temperature heating element. The control unit 15 serving as the second housing error detection portion first detects the temperature T within the fuel cell chamber R1 by the temperature sensor 11f in S201. The control unit 15 then compares the temperature T detected by the temperature sensor 11f with a temperature threshold value Tz which is specified beforehand in S202. The control unit 15 may detect an error in temperature within the fuel cell chamber R1 in S203 and may further specify the failure caused by the ventilation exhaust check valve 41 in S204.

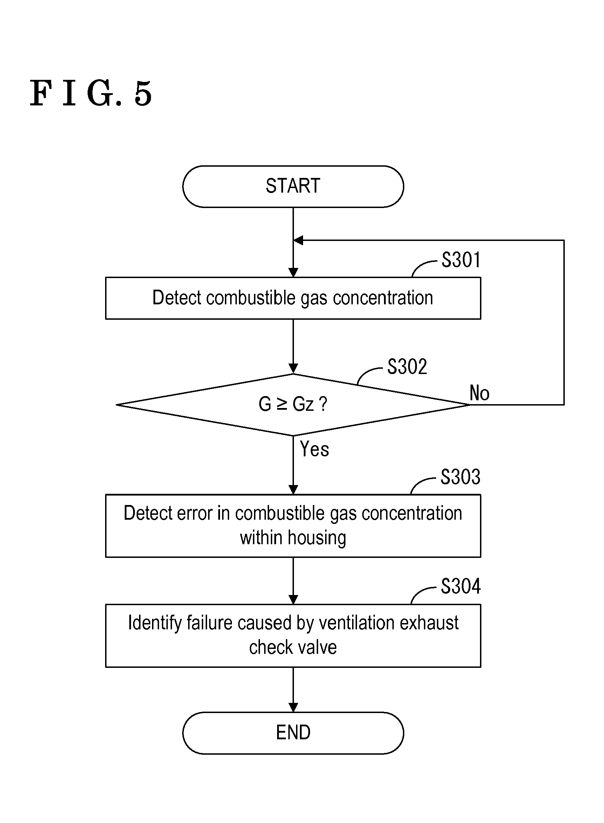

The combustible gas concentration sensor 11 g serving as the combustible gas concentration detection device is provided at the fuel cell chamber R1 to detect the combustible gas concentration. In this case, the failure caused by the ventilation exhaust check valve 41 is identified on a basis of a flowchart illustrated in Fig. 5. In a case where the failure is caused by the ventilation exhaust check valve 41 in the closed state if the combustible gas leaks from the fuel cell module 11 into the fuel cell chamber R1, the ventilation within the fuel cell chamber R1 may be insufficient. Therefore, the control unit 15 serving as the first housing error detection portion detects a combustible gas concentration G by the combustible gas concentration sensor 11 g in S301. The control unit 15 then compares the combustible gas concentration G within the fuel cell chamber R1 detected by the combustible gas concentration sensor 11 g with a predetermined threshold value Gz of the combustible gas concentration specified beforehand in S302. The control unit 15 detects an error in the combustible gas concentration within the fuel cell chamber R1 in S303. As a result, the failure caused by the ventilation exhaust check valve 41 is identified in S304.

As mentioned above, the fuel cell system 100 of the present embodiment includes the fuel cell 34 generating the electric power from the fuel and the oxidant gas, the combusting portion 36 generating the exhaust combustion gas by burning the anode off-gas from the fuel cell 34 and the cathode off-gas from the fuel cell 34, the casing 31 formed by the insulative material and accommodating the fuel cell 34 and the combusting portion 36 at an inner portion in an airtight manner, the housing 10a accommodating the casing 31 at an inner portion, the ventilation exhaust line KL including the air intake port 10c that is provided at the housing 10a to suction gas from the outside of the housing 10a and the ventilation air exhaust port 10d that is provided at the housing 10a to discharge gas within the housing 10a, the ventilation exhaust line KL through which air introduced by the air intake portion 10c from the outside flows, the air thereafter being discharged from the ventilation air exhaust port 10d, the combustion exhaust line NL including the cathode air supply pipe 11 c that connects the housing 10a and the fuel cell 34 each other to supply air including the oxidant gas within the housing 10a to the fuel cell 34 and the exhaust pipe 11 d that connects the combusting portion 36 and the outside of the housing 10a each other to discharge the exhaust combustion gas generated at the combusting portion 36 to the outside of the housing 10a, the combustion exhaust line NL being branched from a portion of the ventilation exhaust line KL to be independently provided, the ventilation exhaust check valve 41 provided at the ventilation exhaust line KL to inhibit the exhaust combustion gas from the outside of the housing 10a from flowing backwards into the housing 10a by flowing through the ventilation air exhaust port 10d, and the combustion exhaust check valve 43 provided at the combustion exhaust line NL to inhibit the exhaust combustion gas from the outside of the housing 10a from flowing backwards into the housing 10a by flowing through the exhaust pipe 11 d.

Accordingly, in the standby state of the fuel cell system 100, the exhaust combustion gas from the outside of the housing 10a is inhibited form flowing backwards into the housing 10a (fuel cell chamber R1) by flowing through the ventilation air exhaust port 10d or the exhaust pipe 11 d by the ventilation exhaust check valve 41 provided at the ventilation exhaust line KL and the combustion exhaust check valve 43 provided at the combustion exhaust line NL.

In addition, because of the ventilation exhaust check valve 41 provided at the ventilation exhaust line KL and the combustion exhaust check valve 43 provided at the combustion exhaust line NL, it may be easily identified that which check valve 41 or 43 causes the failure on a basis of circumstances where the error is detected in a case where the error occurs in the operation of the fuel cell system 100. For example, in a case where the temperature within the housing 10a (fuel cell chamber R1) abnormally increases or the combustible gas concentration within the housing 10a becomes high, the failure caused by the ventilation exhaust check valve 41 in the closed state is identifiable. In a case where the error in the combustion exhaust line NL is detected, the failure caused by the combustion exhaust check valve 43 in the closed state is identifiable.

In addition, the ventilation exhaust check valve 41 is provided at the ventilation air exhaust port 10d that is disposed at an outlet side of the ventilation exhaust line KL. Thus, in a case where the failure occurs by the ventilation exhaust check valve 41, provided at the outlet side of the ventilation exhaust line KL, in the closed state, air at the combustion exhaust line NL flows into the housing 10a from an inlet side of the ventilation exhaust line KL so as to ventilate the inside of the housing 10a (fuel cell chamber R1). Accordingly, as compared to a case where the ventilation exhaust check valve 41 is provided at the inlet side of the ventilation exhaust line KL, the abnormal increase of the temperature within the housing 10a is restrained.

The fuel cell system 100 further includes the flow sensor 11 c2 detecting the flow rate of gas (i.e., cathode air flow rate Q) flowing through the combustion exhaust line NL and the control unit 15 detecting the error in the combustion exhaust line NL based on the detected flow rate of gas detected by the flow sensor 11c2. Accordingly, the control unit 15 may detect the error in the combustion exhaust line NL based on the detected flow rate of gas detected by the flow sensor 11c2. Thus, in a case where the failure occurs by the combustion exhaust check valve 43 in the closed state and thus the blocking of the combustion exhaust line NL occurs, the error in the combustion exhaust line NL is detectable. As a result, the failure caused by the combustion exhaust check valve 43 is identifiable.

The fuel cell system 100 further includes the combustible gas concentration sensor 11 g provided within the housing 10a to detect the combustible gas concentration G within the housing 10a, and the control unit 15 detecting the error in the combustible gas concentration within the housing 10a based on the detected combustible gas concentration detected by the combustible gas concentration sensor 11g. Accordingly, the control unit 15 may detect the error in the combustible gas concentration within the housing 10a based on the detected combustible gas concentration detected by the combustible gas concentration sensor 11 g. Thus, in a case where the failure occurs by the ventilation exhaust check valve 41 in the closed state and thus the ventilation within the housing 10a is inhibited so that the combustible gas flows into the housing 10a from the casing 31, the control unit 15 may detect the error state within the housing 10a. As a result, the failure caused by the ventilation exhaust check valve 41 is identifiable.

The fuel cell system 100 further includes the temperature sensor 11f provided within the housing 10a to detect the temperature within the housing 10a and the control unit 15 detecting the error in the temperature within the housing 10a based on the detected temperature within the housing 10a detected by the temperature detection device 11 f. Accordingly, the control unit 15 may detect the error in the temperature within the housing 10a based on the detected temperature within the housing 10a detected by the temperature sensor 11 f. Thus, in a case where the failure occurs by the ventilation exhaust check valve 41 in the closed state and thus the ventilation within the housing 10a is inhibited so that the temperature within the housing 10a increases, the control unit 15 may detect the error state within the housing 10a. As a result, the failure caused by the ventilation exhaust check valve 41 is identifiable.

In the aforementioned embodiment, the combustion exhaust check valve 43 is mounted or attached to the exhaust combustion gas port 10e at the inner panel 10b. Alternatively, the combustion exhaust check valve 43 may be mounted or attached to an upper portion of the combustion exhaust duct 52 opening to the inner pipe 53a of the chimney portion 53, for example.

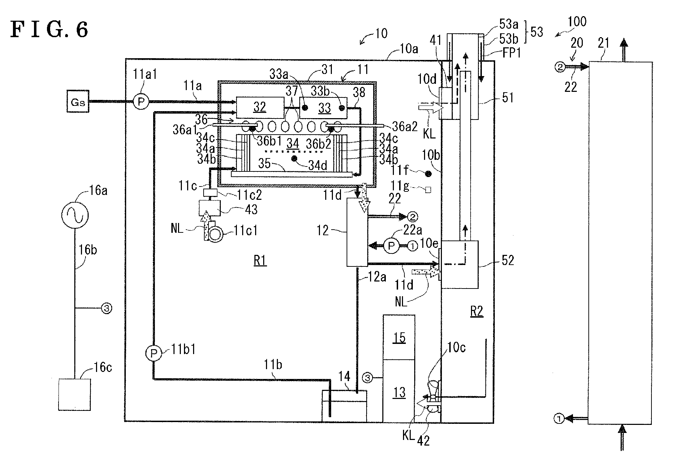

A second embodiment is explained with reference to Fig. 6. In the first embodiment, the combustion exhaust check valve 43 is provided at an outlet side of the combustion exhaust line NL. Alternatively, the combustion exhaust check valve 43 may be provided at an inlet side of the combustion exhaust line NL. Specifically, in the second embodiment, the combustion exhaust check valve 43 is provided at the cathode air supply pipe 11c opening to the fuel cell chamber R1 that is defined within the housing 10a. The other construction of the second embodiment is substantially the same as the first embodiment. Thus, similar components and members of the second embodiment to the first embodiment bear the same reference numerals as the first embodiment and explanation is omitted. The inlet side of the combustion exhaust line NL where the combustion exhaust check valve 43 is provided is constituted by the cathode air supply pipe 11c and the cathode air blower 11c1. The inlet side of the combustion exhaust line NL where the combustion exhaust check valve 43 is provided corresponds to a range from an opening portion of the cathode air blower 11 c1 provided at the cathode air supply pipe 11 c to a connection portion of the cathode air supply pipe 11 c connected to the fuel cell 34 in a case where the cathode air blower 11c1 is provided at a cathode air supply port (opening end of the cathode air supply pipe 11c) of the cathode air supply pipe 11c. In a case where the cathode air blower 11 c1 is provided at a midpoint of the cathode air supply pipe 11c, the inlet side of the combustion exhaust line NL where the combustion exhaust check valve 43 is provided corresponds to a range from the cathode air supply port (opening end of the cathode air supply pipe 11c) of the cathode air supply pipe 11c to the connection portion of the cathode air supply pipe 11 c connected to the fuel cell 34.

In a case where the combustion exhaust check valve 43 is provided at the outlet side of the combustion exhaust line NL, the combustion exhaust check valve 43 may be exposed to exhaust combustion gas from the outside (for example, exhaust gas from a boiler in a case where the boiler is installed together with the fuel cell system 100 or exhaust gas from an automobile in a case where the automobile is parked in a parking lot near a house where the fuel cell system is installed, for example). As a result, a deterioration of the combustion exhaust check valve 43 may be enhanced or a failure thereof may occur by water vapor contained in the exhaust combustion gas, for example. Because the combustion exhaust check valve 43 in the second embodiment is provided at the cathode air supply pipe 11c provided at the fuel cell chamber R1 within the housing 10a, the deterioration of the combustion exhaust check valve 43 is inhibited from being enhanced and the failure thereof may be inhibited from occurring due to the exhaust combustion gas from the outside.

As mentioned above, in the second embodiment, the combustion exhaust check valve 43 is provided at the cathode air supply pipe 11c positioned at the inlet side of the combustion exhaust line NL. Accordingly, the combustion exhaust check valve 43 is disposed within the housing 10a relative to which the exhaust combustion gas from the outside is inhibited from directly contacting. Thus, the deterioration of the combustion exhaust check valve 43 caused by the water vapor in the exhaust combustion gas from the outside, for example, may be inhibited.

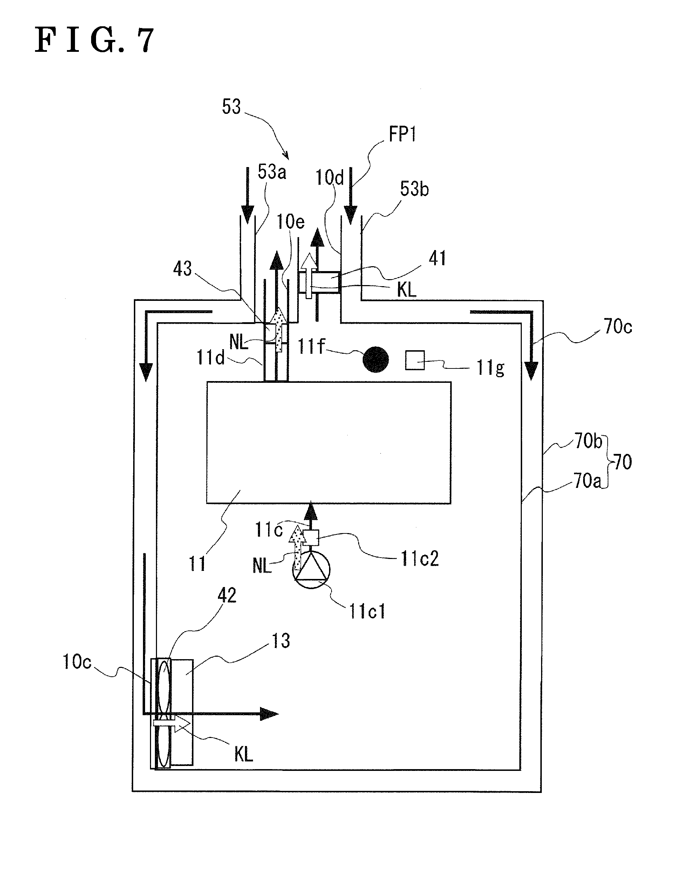

A third embodiment of the fuel cell system is explained with reference to Fig. 7. In the third embodiment, a housing 70 includes a double structure by including an inner wall portion 70a and an outer wall portion 70b entirely covering the inner wall portion 70a. The air intake flow passage FP1 formed between the inner pipe 53a and the outer pipe 53b of the chimney portion 53 is in communication with a peripheral flow passage 70c formed between the inner wall portion 70a and the outer wall portion 70b by extending vertically and horizontally. The aforementioned construction is different from the first embodiment.

In the fuel cell system of the third embodiment, as illustrated in Fig. 7, the air intake port 10c is provided at a lower left portion of the housing 70 so as to open to the housing 70. The ventilation fan 42 is provided at the air intake port 10c. The ventilation fan 42 suctions or takes in air at the peripheral flow passage 70c to send the air into the housing 70 where the fuel cell module 11 is provided. The cathode air supply pipe 11c opens within the housing 70 so as to be connected to the fuel cell within the fuel cell module 11.

The cathode air blower 11c1 is provided at an inlet of the cathode air supply pipe 11c. Air within the housing 70 is sent to the fuel cell within the fuel cell module 11 by the cathode air blower 11 c1. The construction of the fuel cell module 11 in the third embodiment is substantially the same as the first embodiment.

The exhaust pipe 11 d emitting the exhaust combustion gas which results from burning at the combusting portion is formed to extend from the fuel cell module 11. The exhaust pipe 11 d is connected to the chimney portion 53. The exhaust combustion gas port 10e and the ventilation air exhaust port 10d are provided to open to the inner pipe 53a of the chimney portion 53. The exhaust pipe 11 d is connected to the exhaust combustion gas port 10e.

The ventilation air exhaust port 10d sends out air within the housing 70 not taken in by the cathode air supply pipe 11c so as to flow through the housing 70 to the chimney portion 53. The ventilation exhaust air emitted from the ventilation air exhaust port 10d and the exhaust combustion gas emitted from the exhaust combustion gas port 10e join together within the inner pipe 53a of the chimney portion 53 to be discharged to the outside. The combustion exhaust check valve 43 is provided before a portion of the exhaust pipe 11 d where the exhaust combustion gas joins the ventilation exhaust. The ventilation exhaust check valve 41 is provided at the ventilation air exhaust port 10d. The other construction of the third embodiment is substantially the same as the first embodiment.

In the fuel cell system of the present embodiment, the housing 70 includes a double structure formed by the inner wall portion 70a and the outer wall portion 70b. Thus, even in a case where any gas blows out from the fuel cell module 11, for example, into the housing 70, such gas is restrained from leaking to the outside of the housing 70. In addition, the peripheral flow passage 70c between the outer wall portion 70b and the inner wall portion 70a is at a negative pressure because of the ventilation fan 42. Thus, any gas which flows into the peripheral flow passage 70c is inhibited form leaking to the outside of the outer wall portion 70b. The other effects of the third embodiment are substantially the same as the first embodiment.

The aforementioned construction of the fuel cell system 100 is an example and may be appropriately and variously modified or changed.

## Claims

1. A fuel cell system (100) comprising:
a fuel cell (34) generating an electric power from a fuel and an oxidant gas;
a combusting portion (36) generating an exhaust combustion gas by burning an anode off-gas from the fuel cell (34) and a cathode off-gas from the fuel cell (34);
a casing (31) formed by an insulative material and accommodating the fuel cell (34) and the combusting portion (36) at an inner portion in an airtight manner;
a housing (10a) accommodating the casing (31) at an inner portion;
a ventilation exhaust line (KL) including an intake portion (10c) that is provided at the housing (10a) to suction gas from an outside of the housing (10a) and an exhaust portion (10d) that is provided at the housing (10a) to discharge gas within the housing (10a), the ventilation exhaust line (KL) through which air introduced by the intake portion (10c) from the outside flows, the air thereafter being discharged from the exhaust portion (10d);
a combustion exhaust line (NL) including a cathode air supply pipe (11c) that connects the housing (10a) and the fuel cell (34) each other to supply air including the oxidant gas within the housing (10a) to the fuel cell (34) and an exhaust pipe (11 d) that connects the combusting portion (36) and the outside of the housing (10a) each other to discharge an exhaust combustion gas generated at the combusting portion (36) to the outside of the housing (10a), the combustion exhaust line (NL) being branched from a portion of the ventilation exhaust line (KL) to be independently provided;
a ventilation exhaust check valve (41) provided at the ventilation exhaust line (KL) to inhibit an exhaust combustion gas from the outside of the housing (10a) from flowing backwards into the housing (10a) by flowing through the exhaust portion (10d); and
a combustion exhaust check valve (43) provided at the combustion exhaust line (NL) to inhibit an exhaust combustion gas from the outside of the housing (10a) from flowing backwards into the housing (10a) by flowing through the exhaust pipe (11 d).

2. The fuel cell system (100) according to claim 1, wherein the combustion exhaust check valve (43) is provided at an inlet side of the combustion exhaust line (NL).

3. The fuel cell system (100) according to either claim 1 or 2, wherein the ventilation exhaust check valve (41) is provided at an outlet side of the ventilation exhaust line (KL).

4. The fuel cell system (100) according to any one of claims 1 through 3, further comprising:
a flow rate detection device (11c2) detecting a flow rate of gas (Q) flowing through the combustion exhaust line (NL); and
a combustion exhaust line error detection portion (15) detecting an error in the combustion exhaust line (NL) based on the detected flow rate of gas detected by the flow rate detection device (11c2).

5. The fuel cell system (100) according to any one of claims 1 through 3, further comprising:
a combustible gas concentration detection device (11g) provided within the housing (10a) to detect a combustible gas concentration (G) within the housing (10a); and
a first housing error detection portion (15) detecting an error in the combustible gas concentration within the housing (10a) based on the detected combustible gas concentration detected by the combustible gas concentration detection device (11 g).

6. The fuel cell system (100) according to any one of claims 1 through 3, further comprising:
a temperature detection device (11f) provided within the housing (10a) to detect a temperature (T) within the housing (10a); and
a second housing error detection portion (15) detecting an error in the temperature within the housing (10a) based on the detected temperature within the housing (10a) detected by the temperature detection device (11f).
